# EUROPÄISCHE PATENTANMELDUNG

(11) **EP 3 226 005 A1**
(43) Veröffentlichungstag der Anmeldung: **04.10.2017**
(21) Anmeldenummer: 16162871.4
(22) Anmeldetag: 30.03.2016
(51) Int. Cl.: G01P 3/481, G01P 3/489, F03D 17/00, G01M 13/02, G01M 13/04

(54) **SENSORMODUL ZUR ZUSTANDSÜBERWACHUNG EINER MASCHINE SOWIE ÜBERWACHUNGSVERFAHREN**

(71) Anmelder: Siemens Aktiengesellschaft, 80333 München (DE)
(72) Erfinder: Hassel, Jörg, 91058 Erlangen (DE); Keck, Reinhold, 90768 Fürth (DE); Klos, Hans-Henning, 90537 Feucht (DE); von Dosky, Stefan, 76149 Karlsruhe (DE)

(57) **Zusammenfassung**

Die Erfindung betrifft ein Sensormodul zur Zustandsüberwachung einer Maschine, wobei eine sich wiederholende Bewegung eines Maschinenteils der Maschine erfasst wird, mit mindestens einem Sensor zum Erfassen von Sensorsignalen und zur Abgabe von analogen Sensorsignalen, welche die erfassten Sensorsignale des Maschinenteils wiedergeben, wobei eine Einheit vorgesehen ist, welche mit dem Sensor verbunden ist, wobei die Einheit zumindest einen ersten Wandler, der die analogen Sensorsignale in digitale Sensordaten konvertiert sowie eine Auswerteeinheit zur Auswertung der digitalen Sensordaten aufweist,
wobei das Sensormodul eine Abtrastrate aufweist und wobei die Abtastrate anhand der Auswertung der digitalen Sensordaten einstellbar ist.

Die Abtastrate wird geschwindigkeitsabhängig gesteuert, sodass pro Umdrehung eine definierte Anzahl von Messwerten erfasst wird, welche definierten Winkelpositionen zugeordnet sind. Dadurch kann eine Ordnungsanalyse direkt auf Grundlage der winkelsynchron erfassten Daten durchgeführt werden.

Zudem betrifft die Erfindung ein entsprechendes Überwachungsverfahren.

## Beschreibung

Die Erfindung betrifft ein Sensormodul zur Zustandsüberwachung einer Maschine, wobei eine sich wiederholende Bewegung eines Maschinenteils der Maschine erfasst wird, mit mindestens einem Sensor zum Erfassen von Sensorsignalen und zur Abgabe von analogen Sensorsignalen, welche die erfassten Sensorsignale des Maschinenteils wiedergeben. Zudem betrifft die Erfindung ein Überwachungsverfahren, welches sich auf dem Sensormodul ausführen lässt.

Die an einer Windenergieanlage angreifenden, dynamischen Rotorlasten beeinflussen die Verformungen, die Beanspruchungen und damit auch die Lebensdauer der eingesetzten Bauteile. Die Rotorlagerung stellt dabei ein wesentliches Element jeder Anlage dar und steht in direkter Wechselwirkung mit den umgebenden Baugruppen. Besonders die in ein nachgeschaltetes Getriebe eingeleiteten Zwangskräfte werden durch die Art der Rotorlagerung beeinflusst. Externe Querkräfte und Kippmomente wirken sich auf die relativen Verlagerungen bzw. Verkippungen und damit auf die Breitenlastverteilung innerhalb der Getriebestufen aus.

Für die Schwingungsinformation werden in feststehenden Getriebeteilen Messsysteme mit Sensoren verbaut. Ein solches Messsystem weist einen über der rotierenden Welle angeordneten Abtastkopf auf und erfasst oder misst mittels einer im Abtastkopf angeordneten Sensoranordnung, die auf optischer, elektrischer oder magnetischer Basis arbeitet, die Position der Welle. Aus den ermittelten Sensorsignalen werden mittels einer Messwertauswertung aktuelle Positionswerte der Welle generiert. Die so ermittelten Positions- und Geschwindigkeitswerte können einer Anlagensteuerung zugeführt werden, die daraus Steuer- und/oder Regelsignale für die Windkraftanlage generiert.

Die Wellenpositionsinformation des Getriebes benötigt man für das Zustandsüberwachungssystem, auch Condition Monitoring System (CMS) genannt. Zur Fernüberwachung von Windenergieanlagen werden sogenannte Condition Monitoring Systeme eingesetzt, die mittels mehrerer Sensorsignale die Windenergieanlage überwachen, beispielsweise hinsichtlich mechanischer Schwingungen und Bauteilneigungen. Die in der Windenergieanlage räumlich verteilten angeordneten Sensoren übertragen die jeweiligen Sensorsignale hierbei in analoger Form zu einer zentralen Auswertungseinheit, die ebenfalls in der Windenergieanlage angeordnet sein kann und die Sensorsignale zwischenspeichert. Der Betreiber der Windenergieanlage kann die in der Auswertungseinheit zwischengespeicherten Sensorsignale dann bei Bedarf telematisch (z. B. über eine Telefonwählverbindung) abfragen, um aktuelle oder bevorstehende Schäden der jeweiligen Windenergieanlage zu erkennen.

Die Signalauswertung arbeitet heute wandlerseitig mit festen Abtastraten, die im Nachgang sehr aufwändig downgesampled (heruntertakten) werden. Dabei treten numerische Fehler auf.

Die festen Abtastraten können ggf. in festen Stufen voreingestellt werden. Typischerweise wird diese Abtastrate so abgelegt, dass sie möglichst hoch gewählt wird, um auch die "Worst Case" Situation abzudecken, z.B. die Situation bei maximaler Drehzahl, wenn auch die Anregungen die maximale Frequenz aufweisen. Dadurch ist für die meisten Messwerte, die ausgewertet werden, die Abtastrate unnötig hoch (ca. Faktor 5 bis 10). Die Menge der übertragenen und auszuwertenden Wandlerdaten belasten unnötig die Signalprozessoren.

Im Nachgang werden Algorithmen zur Datenauswertung angewendet, wofür die Abtastrate nachträglich mit viel Rechenaufwand reduziert wird, z.B. für die Ordnungsanalyse.

Der Erfindung liegt die Aufgabe zugrunde, eine verbesserte Vorrichtung und ein verbessertes Verfahren zur Zustandsüberwachung einer Maschine anzugeben, welchem eine verbesserte und schnellere Signalverarbeitung zugrunde liegt.

Die erste Aufgabe wird gelöst durch die Angabe eines Sensormoduls zur Zustandsüberwachung einer Maschine, wobei eine sich wiederholende Bewegung eines Maschinenteils der Maschine erfasst wird, mit mindestens einem Sensor zum Erfassen von Sensorsignalen und zur Abgabe von analogen Sensorsignalen, welche die erfassten Sensorsignale des Maschinenteils wiedergeben. Dabei ist eine Einheit vorgesehen, welche mit dem Sensor verbunden ist. Die Einheit weist zumindest einen ersten Wandler, der die analogen Sensorsignale in digitale Sensordaten konvertiert sowie eine Auswerteeinheit zur Auswertung der digitalen Sensordaten auf. Dabei weist das Sensormodul eine Abtastrate auf, wobei die Abtastrate anhand der Auswertung der digitalen Sensordaten einstellbar ist.

Die zweite Aufgabe wird gelöst durch die Angabe eines Überwachungsverfahrens für eine Maschine, wobei eine sich wiederholende Bewegung eines Maschinenteils der Maschine erfasst wird, insbesondere einer Windkraftanlage mit rotierenden Maschinenteilen, mit den folgenden Schritten:
- Erfassen von Sensorsignalen des Maschinenteils mittels mindestens eines Sensors in einem Sensormodul und Abgabe von analogen Sensorsignalen, welches die erfassten Sensorsignale des Maschinenteils wiedergeben,
- Konvertierung der analogen Sensorsignale in digitale Sensordaten in einer Einheit mit zumindest einem ersten Wandler, welcher mit dem Sensor verbunden ist,
- Auswertung der digitalen Sensordaten durch eine in der Einheit vorgesehenen Auswerteeinheit,
- Aufweisen von einer Abtastrate des Sensormoduls und Einstellen der Abtastrate anhand der Auswertung der digitalen Sensordaten.

Erfindungsgemäß findet die Signalauswertung nun sensornah statt. Durch die Sensoren können insbesondere die Rotorposition und/oder Drehzahl in einer Windenergieanlage erfasst werden. Als Sensor kann hier auch ein Drehwinkelgeber verwendet werden. Direkt bei der Wandlung von den analogen in die digitalen Sensordaten regelt die Auswertung der Sensordaten, hier z.B. die Drehzahlinformation bzw. die Wellenposition mit einem für und in der Applikation einstellbaren Verhältnis, nun erfindungsgemäß die Abtastrate der Wandlung. Hierdurch finden eine applikationsangepasste Signalwandlung und auch bereits eine applikationsangepasste Signalverdichtung statt. Dabei ist die Abtastrate die Häufigkeit, mit der ein kontinuierliches Signal in einer vorgegebenen Zeit abgetastet und in ein zeitdiskretes Signal umgewandelt wird.

In den Unteransprüchen sind weitere vorteilhafte Maßnahmen aufgelistet, die beliebig miteinander kombiniert werden können, um weitere Vorteile zu erzielen.

In einer bevorzugten Ausgestaltung ist das Maschinenteil ein rotierendes Maschinenteil, z.B. in einer Windkraftanlage. Die Auswertung umfasst zumindest eine Drehzahlinformation. Direkt bei der Signalwandlung von analog in digital regelt daher die aus den Sensorsignalen ableitbare Drehzahlinformation bzw. die Wellenposition mit einem für und in der Applikation einstellbaren Verhältnis die Abtastrate der Wandlung.

In einer weiteren bevorzugten Ausgestaltung ist das Maschinenteil ein rotierendes Maschinenteil und die einstellbare Abtastrate eine drehzahlgesteuerte Abtastrate. Durch die drehzahlgesteuerte Abtastrate, also durch Variation der Abtastrate des Analog/Digital-Wandlers direkt durch die Drehwinkelinformation, ergibt sich eine winkelsynchrone Abtastung der Werte, d.h. die Signale werden gleichmäßig über den Drehwinkel erfasst. Dadurch kann das aufwändig wiederholte Abtasten für die Ordnungsanalyse und ähnliche Analysen entfallen.

Bevorzugt ist die Einheit in dem Sensormodul integriert. Die Signalauswertung findet sozusagen sensornah statt. Dadurch ist auch eine einfache Umsetzung möglich.

Bevorzugt ist der zumindest erste Wandler ein Analog/DigitalWandler. Vorzugsweise ist ein Verstärker vorgesehen, durch den die analogen Sensorsignale verstärkbar sind. Dabei kann der Verstärker einstellbar sein. Auch kann ein Filter implementiert sein, der dem Analog/Digital-Wandler vorgeschaltet ist.

In einer zusätzlichen Ausgestaltung der Erfindung können die analogen Sensorsignale zusätzlich in konstanten Zeitintervallen gespeichert werden. Hierfür kann ein zweiter Wandler, insbesondere ein zweiter Analog/Digital-Wandler vorgesehen sein, welcher die Sensorsignale in einem konstanten Zeitintervall speichert.

Die Speicherung der analogen Sensorsignale im konstanten Zeitintervall kann in einer alternativen Ausführungsform auch in dem ersten Wandler vorgesehen sein.

Bevorzugt ist eine Synchronisierung zwischen den im konstanten Zeitintervall gespeicherten analogen Sensorsignalen mit denen durch die Abtastrate ermittelten analogen Sensorsignalen vorgesehen. Das bedeutet, dass alternativ oder parallel hierzu das Signal auch mit dem gleichen oder einem zweiten Analog/Digital-Wandler mit einer konstanten Abtastrate aufgenommen werden kann. Für die Synchronisierung in einer Windenergieanlage ist jeweils das Bezugssystem festzulegen, das überwacht werden soll.

Vorzugsweise ist eine Datenschnittstelle zur Übertragung zumindest der ausgewerteten digitalen Sensordaten an ein räumlich separates und räumlich getrenntes Modul vorgesehen.

Dabei kann das Modul eine Steuerungs- und/oder Regelungseinrichtung oder ein Condition Monitoring System (Zustandsüberwachungssystem) sein. Die Übertragung kann dabei drahtlos erfolgen.

Weitere Merkmale, Eigenschaften und Vorteile der vorliegenden Erfindung ergeben sich aus der nachfolgenden Beschreibung unter Bezugnahme auf die beiliegenden Figuren. Darin zeigen schematisch:
- FIG 1:: eine Windenergieanlage mit Druckmesssensoren,
- FIG 2:: schematisch das erfindungsgemäße Überwachungsverfahren.

Obwohl die Erfindung im Detail durch das bevorzugte Ausführungsbeispiel näher illustriert und beschrieben wurde, ist die Erfindung nicht durch die offenbarten Beispiele eingeschränkt. Variationen hiervon können vom Fachmann abgeleitet werden, ohne den Schutzumfang der Erfindung, wie er durch die nachfolgenden Patentansprüche definiert wird, zu verlassen.

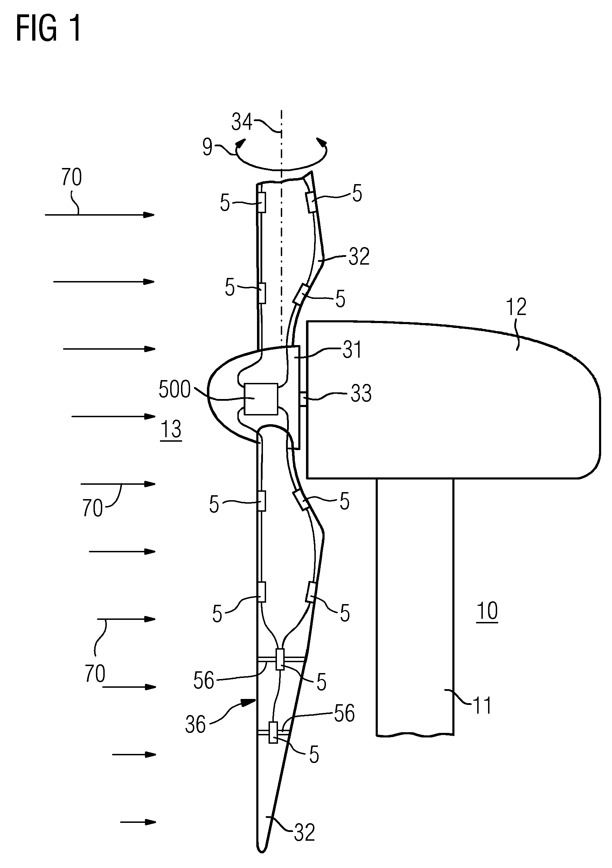

In FIG 1 ist eine Windenergieanlage 10 nach dem Stand der Technik mit einer Windkraftmessvorrichtung dargestellt. Die Windenergieanlage 10 weist einen Turm 11 und eine auf dem Turm 11 drehbar gelagerte Gondel 12 auf. Die Drehachse der Gondel 12 fällt in der Regel mit der Längsachse des Turmes 11 zusammen. An der Gondel 12 ist ein drehbar gelagerter Rotor 13 über eine im Wesentlichen horizontal angeordnete Rotorwelle 33 mit der Gondel 12 verbunden. Die Rotationsenergie des Rotors 13 wird dabei über die Rotorwelle 33 an einen innerhalb der Gondel 12 angeordneten Generator zur Energieerzeugung weitergeleitet. Vorzugsweise ist zwischen Rotor 13 und Generator ein Getriebe angeordnet, um die Umdrehungsgeschwindigkeit des Rotors 13 an einen optimalen Generatorbetrieb anpassen zu können. Der Übersicht halber sind das Getriebe und der Generator in FIG 1 nicht dargestellt. Der Rotor 13 selbst weist eine Nabe 31 und zwei oder mehrere an der Nabe 31 befestigten Rotorblätter 32 auf, die unabhängig voneinander um ihre Längsachsen 34 drehbar sind (angedeutet durch den Pfeil 9). Das Drehen des jeweiligen Rotorblatts 32 erfolgt beispielsweise mittels eines hydraulischen Antriebs oder mittels eines Schrittmotors (in der Figur nicht dargestellt).

Die Windkraftmessvorrichtung weist in diesem Ausführungsbeispiel mehrere innerhalb eines Rotorblatts 32 angeordnete erfindungsgemäße Druckmesssensoren 5 auf. Zur Bestimmung der auf das Rotorblatt 32 wirkenden Windkraft sind zwei verschiedene Ausführungsbeispiele möglich. Beide sind in FIG 1 schematisch angedeutet. Bei einem ersten Ausführungsbeispiel sind zur Bestimmung der Windkraft zwei Druckmesssensoren 5 vorgesehen, wobei eine der beiden Druckmesssensoren 5 an der dem Wind zugewandten Seite der als Außenhülle ausgebildeten Rotorblattwand 36 angeordnet ist, während die anderen Druckmesssensoren 5 an der Wind abgewandten Seite der Rotorblattwand 36 positioniert sind. Beide Druckmesssensoren 5 messen dort direkt den vorherrschenden Druck. Beim zweiten Ausführungsbeispiel ist zur Bestimmung der Windkraft lediglich ein Druckmesssensor 5 nötig. Dieser ist aber mit zwei Druckleitungen 56 verbunden, wobei eine der beiden Druckleitungen 56 bis zur Wind zugewandten Seite der als Außenhülle ausgebildeten Rotorblattwand 36 geführt ist, während die andere Druckleitung 56 bis zur Wind abgewandten Seite der Rotorblattwand 36 geführt ist. Beide Druckleitungen 56 übertragen den an der Rotorblattwand 36 vorherrschenden Druck an die Druckmesssensoren 5 zur Bestimmung der einzelnen Druckwerte.

Weiter ist in FIG 1 dargestellt, dass mehrere Druckmesssensoren 5 entlang des gesamten Rotorblattes 32 verteilt sein können. Damit ist es möglich Windlastunterschiede und den Lastverlauf entlang des gesamten Rotorblattes 32 zu bestimmen, die auf ein veränderliches Windströmungsprofil entlang des Rotorblattes zurückzuführen sind. Die Windströmung ist durch Pfeile 70 gekennzeichnet, wobei die unterschiedliche Länge der Pfeile 70 unterschiedliche Strömungsgeschwindigkeiten darstellen sollen. In dem in FIG 1 dargestellten Beispiel sind alle Druckmesssensoren 5 mit einer Sende-/Empfangseinheit 500 verbunden, die in der Nabe 31 angeordnet ist. Anschließend werden die Druckmesswerte an eine entfernte Auswerteeinheit gesendet. Dort werden die entsprechenden zwei Druckmesswerte D1 und D2, beispielsweise durch Subtraktion, miteinander verglichen und ein Vergleichswert ΔD (z.B. ΔD = D2 - D1) ermittelt. Dieser Vergleichswert ΔD wird dann mit einem in einer Datenbank auf einem Speichermedium gespeicherten Referenzvergleichswert verglichen. Somit wird nach Übereinstimmung des Vergleichswerts ΔD mit einem der Referenzvergleichswerte ein Messwert für die Windkraft am Ort der Druckaufnahmen auf das Rotorblatt 32 ermittelt.

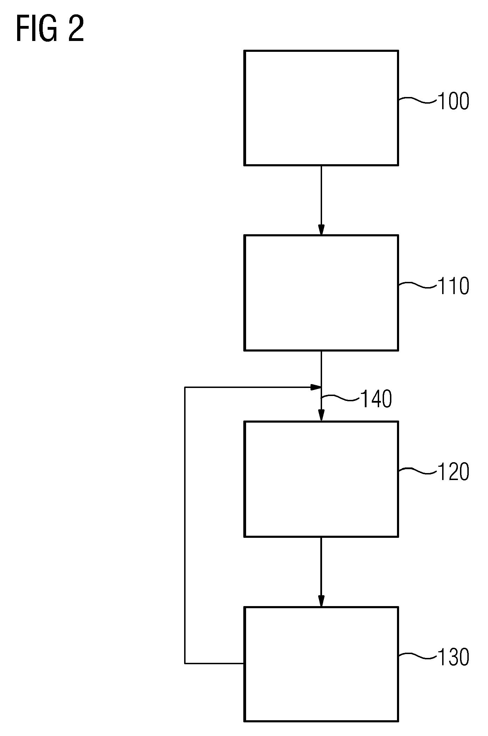

FIG 2 zeigt schematisch das erfindungsgemäße Verfahren. Dazu ist ein Sensor zur Erfassung und zum Messen von Sensorsignalen 100 und zur Abgabe von analogen Sensorsignalen 110, welche die erfassten Sensorsignale der Maschine wiedergeben, vorgesehen.

In dem Sensor ist eine Einheit vorgesehen. Dabei kann die Einheit in dem Sensor integriert werden. Dabei weist diese Einheit einen ersten Analog/Digital-Wandler auf, der die analogen Sensorsignale 110 in digitale Sensordaten 120 anhand einer Abtastrate 140 konvertiert. Zudem ist eine Auswerteeinheit zur Auswertung 130 der digitalen Sensordaten 120 in der Einheit vorgesehen. Erfindungsgemäß ist nun die Abtastrate 140 anhand der Auswertung der digitalen Sensordaten 120 einstellbar. Hierdurch finden eine applikationsangepasste Signalwandlung und auch bereits eine applikationsangepasste Signalverdichtung statt.

Der Vorteil der direkten drehzahlgeführten Abtastung ist eine sofortige Reduktion der Datenmenge auf die notwendige Informationsbandbreite schon am Analog/Digital-Wandler sowie eine deutlich geringere notwendige Rechenleistung, da viele Berechnungsschritte direkt wegfallen.

Direkt bei der Signalwandlung von analog in digital regelt die aus den Sensorsignalen ableitbare Drehzahlinformation bzw. die Wellenposition mit einem für und in der Applikation einstellbaren Verhältnis die Abtastrate der Wandlung.

Das Drehzahlsignal kann für die Steuerung der drehzahlsynchronen Abtastung der Analog/Digital-Wandler für verschiedene Sensoren (Schwingung, Öldruck, Temperatur usw.) genutzt werden.

Durch eine drehzahlgesteuerte Abtastrate, also durch Variation der Abtastrate des Analog/Digital-Wandlers direkt durch die Drehwinkelinformation, ergibt sich eine winkelsynchrone Abtastung der Werte. Dadurch kann das aufwändig wiederholte Abtasten für die Ordnungsanalyse und ähnliche Analysen entfallen. Dabei versteht man unter Ordnungsanalyse die Analyse des Geräusches oder der Schwingungen von rotierenden Maschinen.

Die Ordnungsanalyse bedient sich einer Transformation vom Ortsbereich in den Ordnungsbereich, wobei die Erfassung bzw. Messung im Stand der Technik im Zeitbereich (die Stützstellen der Messung liegen bei vorbestimmten Zeitpunkten - sogenanntes Fensterverfahren) mit anschließendem sogenannten Resampling -also ein wiederholtes Abtasten dieser Messung - in den Ortsbereich erfolgen kann. Um eine Ordnungsanalyse durchzuführen, muss sowohl das Schwingungssignal als auch das Drehzahlsignal über ein solches Fenster synchron aufgenommen werden. Hierbei wird mit einem entsprechenden "Oversampling" gearbeitet, d.h. wenn sich beispielsweise die Welle schneller dreht, werden die Abstände zwischen benachbarten Messpunkten größer. Entsprechend wird der Zeitabstand zwischen den Werten kürzer und die Frequenzspanne größer. Um dies jedoch auszugleichen werden immer zuviele Signale aufgenommen und das anschließende Resampling durchgeführt.

Durch die Erfindung erhält man mit einer Fast Fourier Transformation (FFT) nun direkt eine Ordnungsanalyse. Die Abtastung wird hierdurch direkt auf das zu untersuchende Bezugssystem (z.B. Rotation mit dem Zahnrad oder Wälzlager) transformiert. Dadurch werden nur so viele Sensorwerte aufgenommen wie man wirklich für die gerade auftretende Drehzahl benötigt.

Die Drehzahlinformation dient dem Condition Monitoring System für die Auswertung, Zustandsüberwachung und Datenverdichtung. Sie kann aber auch einem Regelungs- und/oder Steuerungssystem zugeführt werden.

Es ergibt sich ein vereinfachter Einsatz von Korrelationsfunktionen, welche die Signale genau einer Umdrehung des zu betrachtenden Getrieberades bzw. Lagers übereinanderlegen, um Veränderungen zu detektieren. Diese Veränderungen werden dann ausgegeben. Wenn sowohl das auf das Bezugssystem transformierte Schwingungssignal als auch die Drehzahl im System vorliegt, so ist das deutlich einfacher möglich. Durch die Kombination mit dem automatischen Nachführen der Abtastrate mit der aktuellen Winkelposition wird diese Korrelation zudem verbessert, weil Abtastwerte immer von der gleichen Absolutposition, z.B. Planetenzahneingriffe/Lagerposition usw., gebildet werden. Hierdurch können im Bezugssystem ortsfeste Fehler deutlich robuster gefunden werden, als in einem hierzu bewegten Bezugssystem.

Alternativ oder parallel hierzu kann man das Signal auch mit dem gleichen oder einem zweiten Analog/Digital-Wandler mit einer konstanten Abtastrate aufnehmen. Für die Synchronisierung wird jeweils das Bezugssystem festlegen, das überwacht werden soll (Maschinenständer - Resonanzen, Planetenträger, Welle bzw. Hohlwelle usw.). Defekte Zähne der Planeten im Eingriff lassen sich so deutlich genauer auffinden.

Durch die Erfindung wird die Abtastrate in Abhängigkeit des Winkels bzw. der Winkelgeschwindigkeit der überwachten Komponenten eingestellt. Durch die Erfindung ist eine Signalanalyse mit einer geringstmöglichen Datenrate (drehzahlabhängig) möglich.

## Patentansprüche

1. Sensormodul zur Zustandsüberwachung einer Maschine, wobei eine sich wiederholende Bewegung eines Maschinenteils der Maschine erfasst wird, mit mindestens einem Sensor zum Erfassen von Sensorsignalen (100) und zur Abgabe von analogen Sensorsignalen (110), welche die erfassten Sensorsignale (100) des Maschinenteils wiedergeben,
**dadurch gekennzeichnet, dass** eine Einheit vorgesehen ist, welche mit dem Sensor verbunden ist, wobei die Einheit zumindest einen ersten Wandler, der die analogen Sensorsignale in digitale Sensordaten (120) konvertiert sowie eine Auswerteeinheit zur Auswertung (130) der digitalen Sensordaten (120) aufweist,
wobei das Sensormodul eine Abtrastrate (140) aufweist und wobei die Abtastrate (140) anhand der Auswertung der digitalen Sensordaten (120) einstellbar ist.

2. Sensormodul zur Zustandsüberwachung nach Anspruch 1,
**dadurch gekennzeichnet, dass** das Maschinenteil ein rotierendes Maschinenteil ist und die Auswertung zumindest eine Drehzahlinformation umfasst.

3. Sensormodul nach einem der vorhergehenden Ansprüche,
**dadurch gekennzeichnet, dass** das Maschinenteil ein rotierendes Maschinenteil ist und die einstellbare Abtastrate eine drehzahlgesteuerte Abtastrate ist.

4. Sensormodul zur Zustandsüberwachung nach einem der vorhergehenden Ansprüche,
**dadurch gekennzeichnet, dass** ein Verstärker vorgesehen ist, durch den die analogen Sensorsignale (110) verstärkbar sind.

5. Sensormodul zur Zustandsüberwachung nach einem der vorhergehenden Ansprüche,
**dadurch gekennzeichnet, dass** der zumindest erste Wandler ein Analog/Digital-Wandler ist.

6. Sensormodul nach einem der vorhergehenden Ansprüche,
**dadurch gekennzeichnet, dass** die analogen Sensorsignale zusätzlich in konstanten Zeitintervallen gespeichert werden.

7. Sensormodul nach Anspruch 6,
**dadurch gekennzeichnet, dass** ein zweiter Wandler, insbesondere ein zweiter Analog/DigitalWandler vorgesehen ist, welcher die analogen Sensorsignale (110) im konstanten Zeitintervall speichert.

8. Sensormodul nach Anspruch 6,
**dadurch gekennzeichnet, dass** die Speicherung der analogen Sensorsignale (110) im konstanten Zeitintervall in dem ersten Wandler vorgesehen ist.

9. Sensormodul nach einem der vorhergehenden Ansprüche 6 -8,
**dadurch gekennzeichnet, dass** eine Synchronisierung vorgesehen ist, zwischen den im konstanten Zeitintervall gespeicherten analogen Sensorsignalen (110) mit den durch die Abtastrate (140) ermittelten analogen Sensorsignalen (110).

10. Sensormodul nach einem der vorhergehenden Ansprüche,
**dadurch gekennzeichnet, dass** eine Datenschnittstelle zur Übertragung zumindest der ausgewerteten digitalen Sensordaten (120) an ein räumlich separates und räumlich getrenntes Modul vorgesehen ist.

11. Sensormodul nach Anspruch 10,
**dadurch gekennzeichnet, dass** das Modul eine Steuerungs- und/oder Regelungseinrichtung ist.

12. Sensormodul nach Anspruch 10,
**dadurch gekennzeichnet, dass** das Modul ein Condition Monitoring System (Zustandsüberwachungssystem) ist.

13. Sensormodul nach einem der vorhergehenden Ansprüche,
**dadurch gekennzeichnet, dass** die Einheit in dem Sensormodul integriert ist.

14. Sensormodul nach einem der vorhergehenden Ansprüche,
**dadurch gekennzeichnet, dass** das Maschinenteil ein rotierendes Maschinenteil einer Windkraftanlage ist.

15. Überwachungsverfahren für eine Maschine, wobei eine sich wiederholende Bewegung eines Maschinenteils der Maschine erfasst wird, insbesondere einer Windkraftanlage mit rotierenden Maschinenteilen, umfassend die folgenden Schritte:
- Erfassen von Sensorsignalen (100) des Maschinenteils mittels mindestens eines Sensors in einem Sensormodul und Abgabe von analogen Sensorsignalen (110), welches die erfassten Sensorsignale (100) des Maschinenteils wiedergeben,
- Konvertierung der analogen Sensorsignale (110) in digitale Sensordaten (120) in einer Einheit mit zumindest einem ersten Wandler, welche mit dem Sensor verbunden ist,
- Auswertung (130) der digitalen Sensordaten (120) durch eine in der Einheit vorgesehenen Auswerteeinheit,
- Aufweisen von einer Abtastrate (140) des Sensormoduls und Einstellen der Abtastrate (140) anhand der Auswertung (130) der digitalen Sensordaten (120).

16. Überwachungsverfahren nach Anspruch 15,
**dadurch gekennzeichnet, dass** das Maschinenteil ein rotierendes Maschinenteil ist und die Auswertung zumindest eine Drehzahlinformation bereitstellt.

17. Überwachungsverfahren nach einem der vorhergehenden Ansprüche 15-16,
**dadurch gekennzeichnet, dass** das Maschinenteil ein rotierendes Maschinenteil ist und die Abtastrate als eine drehzahlgesteuerte Abtastrate eingestellt wird.

18. Überwachungsverfahren nach einem der vorhergehenden Ansprüche 15-17,
**dadurch gekennzeichnet, dass** die analogen Sensorsignale (110) zusätzlich in konstanten Zeitintervallen gespeichert werden.

19. Überwachungsverfahren nach einem der vorhergehenden Ansprüche 15-18,
**dadurch gekennzeichnet, dass** ein zweiter Wandler, insbesondere ein zweiter Analog/DigitalWandler, vorgesehen ist, welcher die analogen Sensorsignale (110) im konstanten Zeitintervall speichert.

20. Überwachungsverfahren nach Anspruch 19,
**dadurch gekennzeichnet, dass** die Speicherung der analogen Sensorsignale (110) im konstanten Zeitintervall in dem ersten Wandler vorgenommen wird.

21. Überwachungsverfahren nach einem der vorhergehenden Ansprüche 15-20,
**dadurch gekennzeichnet, dass** zur Auswertung eine Übertragung zumindest der ausgewerteten digitalen Sensordaten (120) an ein räumlich separates und räumlich getrenntes Modul durch eine Datenschnittstelle vorgenommen wird.

22. Überwachungsverfahren nach einem der Ansprüche 15-21,
**dadurch gekennzeichnet, dass** die Einheit in dem Sensormodul integriert wird.
